# EUROPEAN PATENT APPLICATION

(11) **EP 1 939 567 A1**
(43) Date of publication of application: **02.07.2008**
(21) Application number: 06127245.6
(22) Date of filing: 27.12.2006
(51) Int. Cl.: F28D 1/02, F28F 13/12

(54) **Thermal exchanging apparatus with hydraulic fan or impeller of improved type**

(71) Applicant: Radiatori Tubor S.P.A., 28924 Verbania Fondotoce (IT)
(72) Inventor: Biglino, Marco, 16148 Genova (IT); Ramponi, Andrea, 28823 Ghiffa (IT)
(74) Representative: Borsano, Corrado

(57) **Abstract**

An thermal exchanging apparatus, of the type comprising a plurality of elements (3,4,5) within which a thermal exchanging fluid is put into circulation, said apparatus further comprising a fan or impeller (2) adapted to promote the thermal exchange between the mentioned elements (3,4,5) and the fluid which dominates in the environment where the same is situated. According to the invention, an actuating impeller (9) is located on the circulation path of said fluid within the apparatus (1) so as to actuate said fan or impeller (2) by effect of the movement of the thermal exchanging fluid put into circulation within the apparatus (1) itself.

## Description

The present invention relates to a thermal exchanging apparatus provided with a hydraulic fan or impeller of improved type.

The field of the invention is that of the thermal exchanging apparatuses such as, for example in the case of radiators, air conditioners, dehumidifiers, humidifiers and the like, in which there is contemplated a fluid (air and/or liquid and/or gas) by means of which the thermal exchange is obtained, put into circulation within the elements of the apparatus.

In order to promote the thermal exchange between the various parts of the elements of the apparatus and the surrounding environment in which the apparatus itself is situated (a room, a refrigerated counter, the internal environment of a boiler, a fluid container), fans or impellers, generally actuated by means of an independently powered electrical motor, are traditionally contemplated.

These embodiments however have the disadvantage of requiring the availability of an electrical source, the necessary system engineering (wirings, switches, safety systems, etc.), as well as the corresponding electrical motor. These accessories indeed have negative repercussions on the production costs of the thermal exchanging apparatus, make more complex the manufacture thereof and may not always be used, particularly in environments unsupplied with electrical power or where this is unfeasible or difficult to access.

A further disadvantage is represented by the running costs of the aforesaid electrical system, which are added to those of the thermal exchanging apparatus itself.

It is the main object of the invention to provide a thermal exchanging apparatus equipped with hydraulic fan or impeller which, with respect to the known apparatuses of the same type, allows to actuate said fans or impellers without the assistance of accessory or auxiliary energy sources with respect to that proper to the operation of the apparatus.

This and other objects are achieved by the thermal exchanging apparatus according to claim 1. Preferred manners for manufacturing the invention result from the remaining claims.

With respect to the known embodiments of the field, the thermal exchanging apparatus of the invention offers the advantage of exploiting the movement of the fluid itself, circulating within the apparatus itself, to operate the hydraulic fan or the impeller connected to the latter. In this manner, the apparatus of the invention overcomes the traditional need to contemplate specific electrical means, with saving on manufacturing, running and system maintenance costs, with further evident advantages on safety and on the overall reliability of the apparatus.

These and other objects, features and advantages result from the following description of a preferred embodiment of the apparatus of the invention shown, by way of non-limitative example, with respect to the figures of the attached drawing tables, in which:
- figure 1 shows an overall view of a first embodiment of the thermal exchanging apparatus of the invention;
- figure 2 shows a variant of the embodiment of the apparatus in figure 1;
- figure 3 shows the detail of the actuating mechanism of the fan or impeller of the apparatus in the preceding figures, with mechanical connection;
- figure 4 shows the detail of the actuating mechanism of the fan or impeller of the apparatus in the preceding figures, in this case with magnetic instead of mechanical connection.

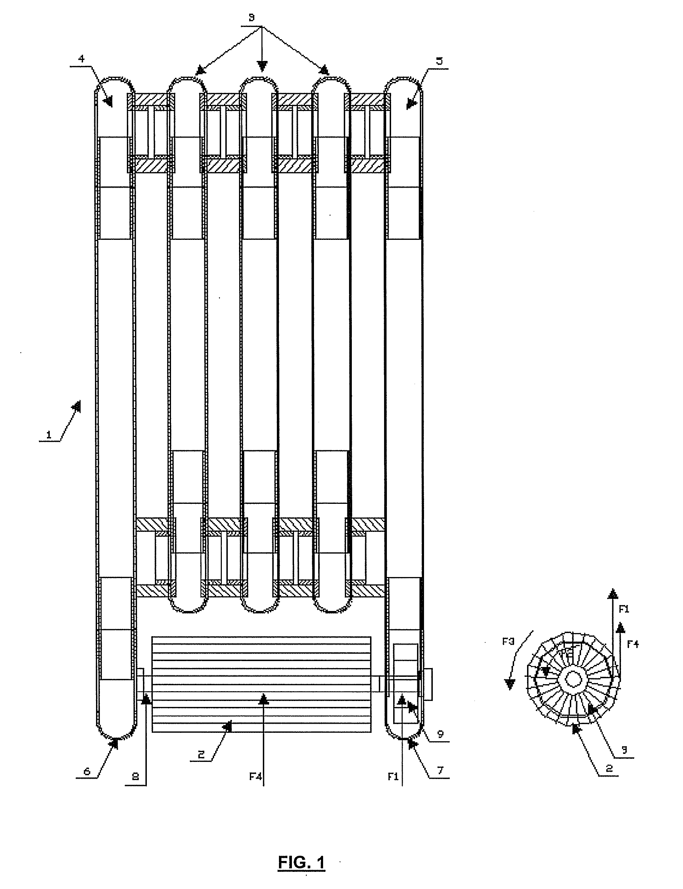

The thermal exchanging apparatus of the invention is indicated as a whole by 1 in figure 1. In the example shown, apparatus 1 consists in a radiator for heating the air in the surrounding environment. Such apparatus may however be of the type adapted to be immersed in another fluid or in the liquid to be heated (such as for example the tube bundle of a thermal exchanger of a boiler). In the first case (air, gas and the like), apparatus 1 is provided with a fan 2, adapted to promote the thermal exchange with the environment where the thermal exchanging apparatus itself is placed. In the second case (liquids and the like), numeral 2 indicates a hydraulic impeller whose function is to cause the forced circulation of the liquid in which the thermal exchanging apparatus is immersed.

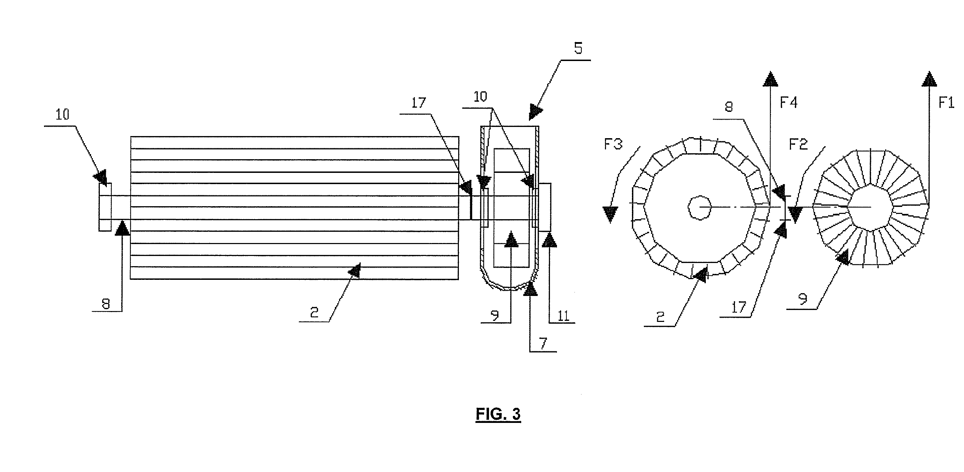

In the embodiment in figure 1, the apparatus of the invention comprises a plurality of elements 3 in which terminal elements 4 and 5 contemplate, at corresponding heads 6 and 7, the attachments to the ends of mechanical shaft 8 of hydraulic fan or impeller 2. According to the invention, moreover, at least one of said ends of shaft 8 is fixed by means of a mechanical connection 17 to an actuating impeller 9, in turn rotationally mounted on at least one pivoting pin 10 contemplated integral with closing flange 11 of head 7 of corresponding element 5 of the apparatus (figure 3). In virtue of this embodiment, the fluid which accesses the elements of apparatus 1 (arrow F1 in figures 1, 2, 3 and 4) causes the rotation of actuating impeller 9 and, consequently, also the rotation of hydraulic fan or impeller 2, in the direction of the respective arrows F2 and F3 in figure 1, 2, 3 and 4.

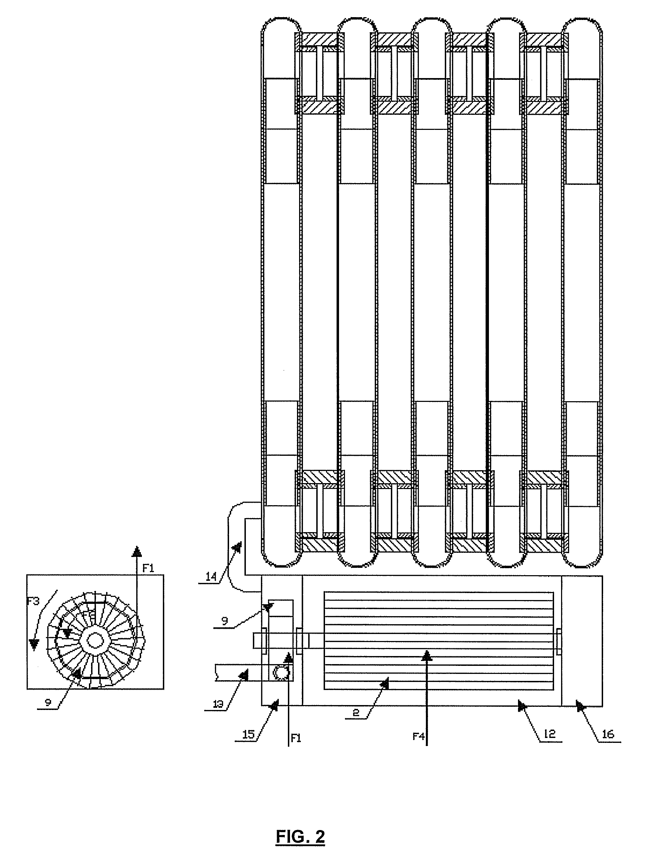

In the variant shown in figure 2, the thermal exchanging apparatus according to the invention contemplates a support 12 separate from the body of the elements of the apparatus itself and provided, on its end 15, with an actuating impeller 9, to which the corresponding end of shaft 8 of hydraulic fan or impeller 2 is fixed. In this embodiment, a conveying pipe fitting 13 of the thermal exchanging fluid in direction of actuating impeller 9, as well as a feeding pipe fitting 14 of the same fluid within elements 3 of apparatus 1 are further provided on end 15 of support 12. Impeller 9 may be mounted either or only on the remaining end 16 of support 12, in which case the mentioned pipe fittings 13 and 14 are also envisaged on the latter end.

The embodiment just described offers the advantage of allowing the application of hydraulic fan or impeller 2 also on an existing, and possibly previously installed, thermal exchanging apparatus (only by way of example, in the case of radiators in a residential building).

Changes may be implemented to the invention described and illustrated above to make variants that are however comprised in the scope of the following claims. Thus, for example, a higher number of hydraulic fans or impellers 2, as well as a different number of actuating impellers 9, may be contemplated. The latter, moreover, may be arranged either or only on the output pipe fitting of the fluid from apparatus 1.

In the case of several impellers and/or supports for apparatus 1, i.e. of several thermal exchanging apparatuses, the case of a single pipe fitting 13 and 14 or of several pipe fittings with similar functions may be contemplated.

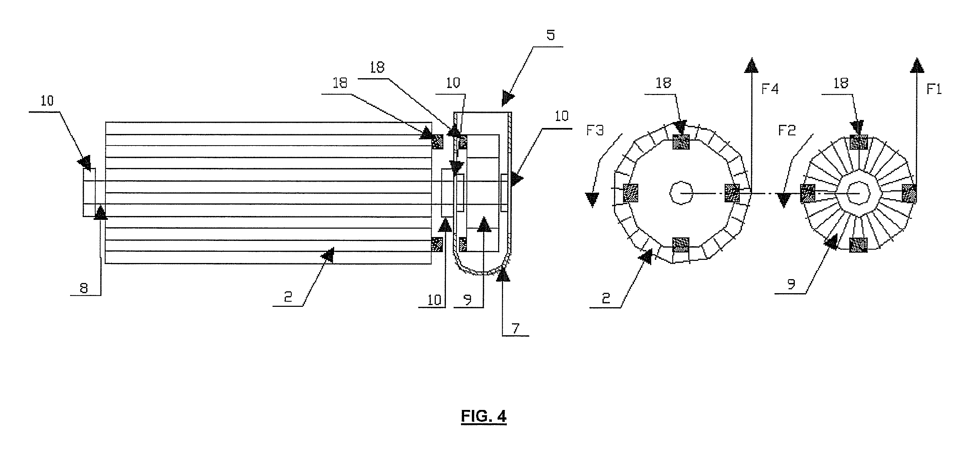

Finally, according to the variant shown in figure 4, again by way of nonlimiting example, the coupling between actuating impeller 9 and the corresponding end of the shaft of hydraulic fan or impeller 2 may be of the magnetic type or the like, in place of mechanical shaft 8; in the case shown in figure 4, by means of the use of magnets 18, mounted both on actuating impeller 2 and on hydraulic fan or impeller 2 with the appropriate contrivances, a similar result is obtained between the moving parts without mechanical coupling 17.

## Claims

1. A thermal exchanging apparatus, of the type comprising a plurality of elements (3,4,5) within which at least one thermal exchanging fluid (air, liquid, gas and the like) is put into circulation; said apparatus further comprises a fan or impeller (2) adapted to promote the thermal exchange between the mentioned elements (3,4,5) and the fluid which dominates in the environment in which the apparatus itself is situated, **characterised in that** means adapted to actuate said fan or impeller (2) by effect of the movement of the mentioned thermal exchanging fluid put into circulation within the apparatus (1) itself are contemplated.

2. An apparatus according to claim 1, **characterised in that** said means consist of at least one actuating impeller (9) arranged on the circulation path of said fluid within the apparatus (1).

3. An apparatus according to claim 2, **characterised in that** said actuating impeller (9) is fixed, on one side (17), to the corresponding end of the shaft (8) of said fan or impeller (2) and, on the other side, to a pin (10) in turn pivotally supported at the corresponding closing flange (11) of the head (6,7) of the terminal element (4,5) which accommodates said impeller (9).

4. An apparatus according to claim 2, **characterised in that** said actuating impeller (9) is mounted at a support (12) contemplated separate from said elements (3,4,5) of the apparatus (1), the mentioned support (12) being further provided with thermal exchanging fluid circulation pipe fittings (13,14) between the elements (3,4,5,) themselves and said impeller (9).

5. An apparatus according to claim 4, **characterised in that** said support (12) is provided with ends (15,16) accommodating at least one actuating impeller (9) and supporting the ends of the shaft (8) and fixedly connecting (17) said fan or impeller (2).

6. An apparatus according to one or more of the preceding claims, **characterised in that** it is contemplated a magnetic coupling (and/or however not a direct mechanical coupling) between the mentioned actuating impeller (9) and said fan or impeller (2).
